# EUROPÄISCHE PATENTSCHRIFT

(11) **EP 1 495 910 B1**
(45) Veröffentlichungstag und Bekanntmachung des Hinweises auf die Patenterteilung: **06.04.2011**
(21) Anmeldenummer: 04015568.1
(22) Anmeldetag: 02.07.2004
(51) Int. Cl.: B60Q 3/02, F21V 5/04, B64D 11/00, H01L 33/00, F21Y 101/02, F21W 101/08

(54) **Leuchtelement mit einem Leuchtmittel**
Lighting element with an illumination means
Elément d'éclairage avec un dispositif d'éclairage

(30) Priorität: 09.07.2003 DE 10331075
(43) Veröffentlichungstag der Anmeldung: 12.01.2005
(73) Patentinhaber: Diehl Aerospace GmbH, 88662 Überlingen (DE)
(72) Erfinder: Helbach, Wolfgang, Dr., 91338 Igensdorf (DE); Krummer, Thomas, 91781 Weissenburg (DE); Schevardo, Dirk-Achim, 91230 Kainsbach (DE)
(74) Vertreter: Diehl Patentabteilung

(56) Entgegenhaltungen:
- EP-A- 0 821 254
- DE-U1- 29 613 798
- JP-A- 2 301 902
- JP-A- 6 097 509
- JP-A- 63 052 491
- US-A1- 2002 141 196

## Beschreibung

Die Erfindung betrifft ein Leuchtelement mit einem Leuchtmittel, vorzugsweise einer Leuchtdiode, nach dem Oberbegriff des Patentanspruchs 1.

Aus der DE 198 43 330 A1 ist eine Flugzeugkabinen-Beleuchtung bekannt, welche aus mehreren, an oder in der Decke einer Flugzeugkabine angebrachten, punktförmigen Lichtquellen besteht, wobei die punktförmigen Lichtquellen mindestens eine Leuchtdiode aufweisen, welche ihr Licht direkt in das Innere der Flugzeugkabine abstrahlen.

In der DE 196 32 699 A1 ist eine Orientierungsanzeige auf Lichtleiterbasis offenbart, bei welcher Lichtleiter von mindestens zwei Leuchtdioden angestrahlt werden und Oberflächenveränderungen an der Längsseite des Lichtleiters zu einer Abgabe von Licht in Form von Strichen, Linien, Punkten, Symbolen u. a. zum Zweck einer Markierung führen.

In der DE 41 42 175 A1 ist eine Anzeigeeinrichtung für Flugzeuge beschrieben, welche flache Lichtleitelemente aufweist, in deren Rand Leuchtdioden in Reihen angeordnet sind.

Die Leuchtelemente nach dem genannten Stand der Technik haben den Nachteil, dass ihre leuchtende Fläche eine bestimmte Mindestgröße hat.

Aus der JP 63-052491 A und der JP-06-007509 ist jeweils eine Einrichtung zur Einkopplung von Licht einer Leuchtdiode in eine optische Faser bekannt, welche einen in einem Träger eingebauten, lichtdurchlässigen Linsenkörper aufweist, der eine linsenförmige Lichteintrittsfläche und eine kleinere, der optischen Faser zugewandte konvexe Lichtaustrittsfläche aufweist.

Aus der JP 02-301902 A ist ein Leuchtelement bekannt, bei welchem eine Leuchtdiode in einem hohlen, zylinderförmigen Abschnitt einer Halterung angeordnet ist, welche in den Hohlraum eines entsprechend geformten Lichtleitkörpers einschraubbar ist. Der Lichtleitkörper hat einen Y-förmigen Querschnitt, wobei seine Lichtaustrittsfläche kleiner als die der Leuchtdiode bzw. der die Leuchtdiode tragenden Halterung ist. Der Lichtleitkörper ist darüber hinaus in einer Öffnung in einem Leuchtenträger eingebaut. Der innere Hohlraum des Lichtleitkörpers ist mit einem lichtdurchlässigen Kleber gefüllt, welcher nach Einschraubung der die Leuchtdiode tragende Halterung den gesamten Hohlraum zwischen Lichtleitkörper und Leuchtdiode ausfüllt. Damit ist ein festes und in sich untrennbar ausgeführtes Leuchtelement gebildet.

Dieser genannte Stand der Technik hat den Nachteil, dass die Leuchtdiode in dem Leuchtelement entweder gar nicht oder aber derart befestigt ist, dass sie bei einem Defekt nicht ohne größeren Aufwand ausgetauscht werden kann.

Es ist nun Aufgabe der Erfindung, ein einfach aufgebautes Leuchtelement mit kleiner leuchtender Fläche zu schaffen, bei dem der Austausch des Leuchtmittels ohne großen Aufwand möglich ist.

Diese Aufgabe wird von einem Leuchtelement mit den Merkmalen des Patentanspruchs 1 erfüllt. Vorteilhafte Ausgestaltungen und Weiterbildungen der Erfindung ergeben sich aus den abhängigen Ansprüchen.

Nach der Erfindung weist ein gattungsgemäßes Leuchtelement einen lichtdurchlässigen Linsenkörper, vorzugsweise aus einem transparenten Kunststoff wie z.B. Polycarbonat, mit einer linsenförmigen Lichteintrittsfläche und mit einer Lichtaustrittsfläche auf, wobei die Lichtaustrittsfläche beliebig klein, auf jeden Fall aber kleiner als die Lichteintrittsfläche ist.

Dadurch wird erreicht, dass die leuchtende Fläche des Leuchtelements beliebig klein gestaltet sein kann, vor allem auch kleiner als das Leuchtmittel selbst.

Das Leuchtmittel ist nun zumindest teilweise mit Silikon in dem Leuchtelement vergossen und so in diesem lösbar befestigt sein.

Vorzugsweise ist die Lichteintrittsfläche des Linsenkörpers derart geformt, dass das von dem Leuchtmittel in den Linsenkörper eindringende Licht auf die Lichtaustrittsfläche gelenkt wird. Durch diese Fokussierung wird erreicht, dass die leuchtende Fläche trotz ihrer geringen Ausdehnung ausreichend hell leuchtet.

Weiterhin kann vorgesehen sein, dass das Leuchtelement derart in den Leuchtenträger eingebaut ist, dass die Lichtaustrittsfläche des Linsenkörpers bündig mit der Oberfläche des Leuchtenträgers ist, wodurch erreicht wird, dass die Lichtaustrittsfläche bei ausgeschaltetem Leuchtmittel nahezu unsichtbar ist.

Die Lichtaustrittsfläche des Linsenkörpers kann überdies plan und/oder angeraut ("angeschliffen") sein und kreisförmig, drei- oder mehreckig oder auch in beliebiger anderer Form ausgeführt sein. Außerdem sollte das Leuchtmittel in dem Leuchtelement derart angeordnet sein, dass ein Großteil des von ihm ausgestrahlten Lichts auf die Lichteintrittsfläche des Linsenkörpers trifft.

In Weiterbildung der Erfindung kann vorgesehen sein, dass das Leuchtmittel auf einer Leiterplatte befestigt und verschaltet ist, welche in dem Leuchtelement angeordnet und zumindest teilweise mit Silikon vergossen und lösbar befestigt ist, wobei das Leuchtmittel vorzugsweise als SMD-Leuchtdiode ausgeführt ist.

Ebenso kann der Linsenkörper in einen Leuchtelementkörper integriert sein, welcher aus demselben Material besteht wie der Linsenkörper und welcher das Leuchtmittel aufnimmt. Vorzugsweise sind dabei Linsenkörper und Leuchtelementkörper einstückig ausgeführt.

In Ausgestaltung der Erfindung ist vorgesehen, dass das Leuchtelement bzw. der Leuchtelementkörper eine vorzugsweise mit Anschlag ausgestattete Führung für das Leuchtmittel und/oder für die Leiterplatte und/oder eine Ausnehmung für die Zuführung eines elektrischen Kabels in das Leuchtelement bzw. den Leuchtelementkörper aufweist.

Eine weitere Ausgestaltung der Erfindung sieht vor, dass das Leuchtelement bzw. der Leuchtelementkörper in einer Buchse gehaltert sind, wobei die Buchse in dem Leuchtenträger eingebaut ist. Dabei sind die Lichtaustrittsfläche des Linsenkörpers, die Stirnfläche der Buchse und die Oberfläche des Leuchtenträgers bündig zueinander, um die Lichtaustrittsfläche bei ausgeschaltetem Leuchtelement nahezu unsichtbar zu machen.

Das Leuchtelement bzw. die Buchse können im Leuchtenträger verklebt sein. Als Leuchtenträger kann die Decke oder Wand einer Flugzeugkabine dienen. Die Leuchtdiode strahlt vorzugsweise weißes Licht ab und kann mit gleichmäßiger Helligkeit, blinkend oder auch flackernd (heller leuchtend - dunkler leuchtend) betrieben werden. Das Leuchtelement kann Teil einer Sternenhimmel-Beleuchtung sein.

Anhand der Zeichnungen soll im folgenden die Erfindung näher erläutert werden. Es zeigen:
- Figur 1: ein erstes Ausführungsbeispiel eines eingebauten Leuchtelements nach dem Stand der Technik im Querschnitt,
- Figur 2: ein zweites Ausführungsbeispiel nach dem Stand der Technik,
- Figur 3: ein drittes Ausführungsbeispiel nach dem Stand der Technik,
- Figur 4: ein Ausführungsbeispiel gemäß der Erfindung,
- Figur 5a: einen Leuchtelementkörper eines weiteren Ausführungsbeispiels nach dem Stand der Technik in perspektivischer Ansicht und
- Figur 5b: das Leuchtelement des Ausführungsbeispiels von Figur 5a im Quer- schnitt entlang der Linie A-A.

In einer Deckenpanele 1 einer Flugzeugkabine ist in einer entsprechenden Bohrung ein Leuchtelement 2 eingebaut. Dieses Leuchtelement 2 umfasst ein Kunststoffformteil 3, welches eine Bohrung 4 aufweist, die im oberen Bereich einen großen Durchmesser, daran anschließend einen mittleren Durchmesser und im unteren kurzen, dem Innenraum 5 der Flugzeugkabine zugewandten Bereich einen sehr kleinen Durchmesser von etwa 1 mm aufweist. In die Bohrung 4 des Kunststoffformkörpers 3 ist eine Leuchtdiode 6 derart eingesetzt, dass sie durch den Übergang von dem Bereich mit dem weiten Durchmesser in den Bereich mit dem mittleren Durchmesser der Bohrung etwa in der Mitte des Formkörpers 3 (Stufen 3.1 und 3.2) gehalten wird. Unterhalb der Leuchtdiode ist in der Bohrung 4 ein lichtdurchlässiger Linsenkörper 7 aus transparentem Kunststoff eingepasst, der eine linsenförmig nach oben gewölbte Lichteintrittsfläche 8 und eine plane Lichtaustrittsfläche 9 aufweist. Die Anordnung von Leuchtdiode 6 und Linsenkörper 7 sowie die Form der Lichteintrittsfläche 8 sind derart ausgebildet, dass das von der Leuchtdiode 6 ausgestrahlte Licht (siehe Strahlengang 10) gebündelt und zur Lichtaustrittsfläche 9 des Linsenkörpers 7 gelenkt wird. Der elektrische Anschluss der Leuchtdiode 6 erfolgt über deren Anschlussbeinchen 11 und 12 sowie über daran angelötete bzw. angeschweißte Kabel 13 und 14.

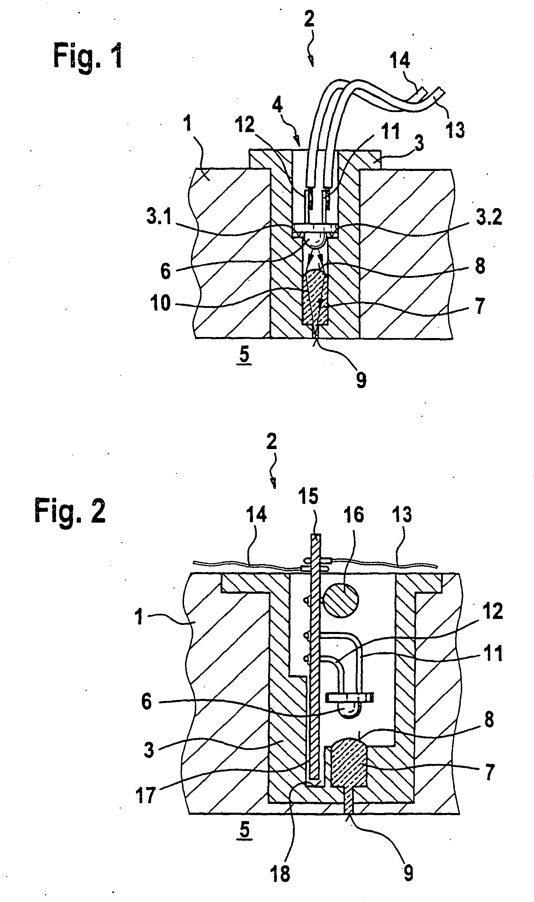

Bei dem Ausführungsbeispiel gemäß Figur 2 ist die Leuchtdiode 6 mit ihren Beinchen 11 und 12 auf einer Leiterplatte 15 befestigt und verdrahtet. Diese Leiterplatte trägt weiterhin u.a. eine ESD-Schutzdiode 16 und ist in eine Führung 17 gesteckt, welche im Kunststoffformteil 13 ausgebildet ist. Die Führung 17 weist einen Anschlag 18 auf, der durch eine definierte Positionierung der Leiterplatte 15 im Leuchtelement 2 dafür sorgt, dass die Leuchtdiode 6 im optimalen Abstand und in optimaler Positionierung gegenüber dem Linsenkörper 7 angeordnet ist.

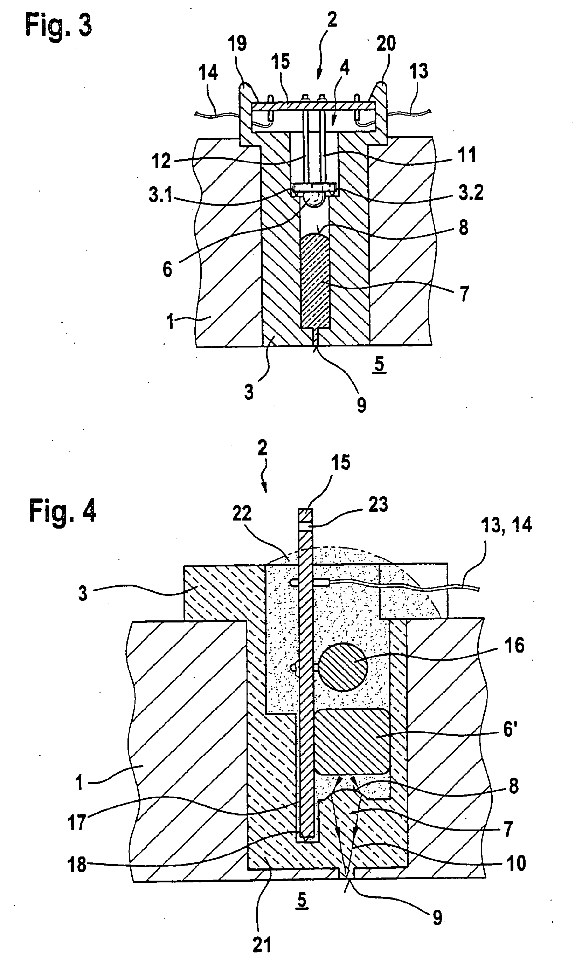

Im Ausführungsbeispiel gemäß Figur 3 ist die Leiterplatte 15 nicht parallel, sondern senkrecht zur optischen Achse ausgerichtet. Die mit ihren Beinchen 11 und 12 auf der Leiterplatte 15 befestigte und verschaltete Leuchtdiode 6 steht auf den Stufen 3.1 und 3.2 in der Bohrung 4 im Formkörper 3 auf. Am Formkörper 3 einstückig angeformte Rasthaken 19 und 20 hintergreifen die Leiterplatte 15 und verhindern so ein Herausfallen von Leiterplatte 15 und Leuchtdiode 6 aus dem Leuchtelement 2. Die Anschlusskabel 13 und 14 sind an den Rasthaken 19 und 20 vorbei geführt.

Im Ausführungsbeispiel gemäß Figur 4 sind der Formkörper 3 und der Linsenkörper 7 einstückig in Form eines Leuchtelementkörpers 21, der als Ganzes aus lichtdurchlässigem Kunststoff besteht, ausgeführt. Darüber hinaus ist als Leuchtmittel eine SMD-Leuchtdiode 6' verwendet, welche eine seitliche Lichtabstrahlung besitzt. Die Anschlusskabel 13 und 14 sind durch Bohrungen bzw. Ausnehmungen im Leuchtelementkörper 21 hindurch geführt. Der freie Innenraum im Leuchtelementkörper 21 ist mit essigfreiem Silikon als Vergussmasse 22 versiegelt. Die Leiterplatte 15 weist an ihrem oberen Ende ein Auszugsloch 23 auf, mit dem die Leiterplatte 15 samt Leuchtdiode 6', aufgebrachter Elektronik 16 und Anschlusskabeln 13, 14 sowie der Vergussmasse 22 aus dem Leuchtelementkörper 21 herausgezogen werden kann. Somit ist ein Austausch der Leuchtdiode 6' auf einfache Weise möglich.

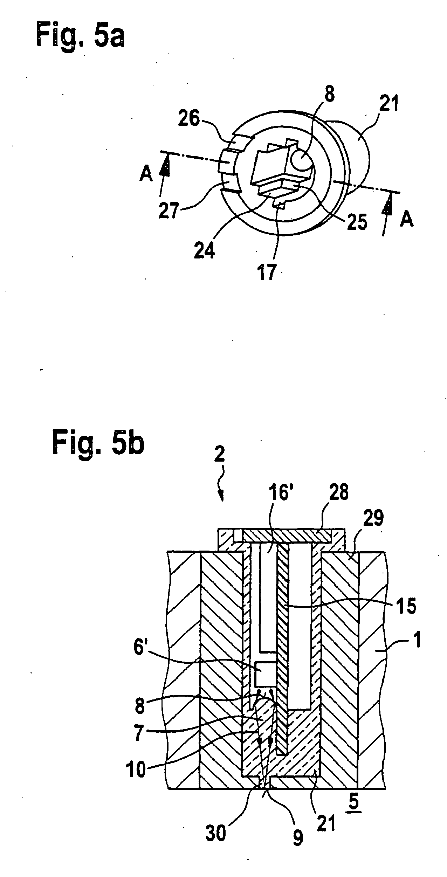

In Figur 5a ist der Leuchtelementkörper 21 eines weiteren Ausführungsbeispiels des Leuchtelements 2 in perspektivischer Darstellung gezeigt. Man erkennt die Führung 17 für die Leiterplatte 15 sowie eine Führung 24 für die SMD-Leuchtdiode 6'. Diese Führung 24 besitzt ebenso wie die Führung 17 einen Anschlag 25 zur definierten Positionierung der Leuchtdiode 6' gegenüber der Lichteintrittsfläche 8 des Leuchtelementkörpers 21. Ebenso sind die Kabelaustritts-Ausnehmungen 26 und 27 sichtbar.

In Figur 5b ist das komplette Leuchtelement 2 unter Verwendung des Leuchtelementkörpers 21 aus Figur 5a im Querschnitt entlang der Linie A-A gezeigt. Auf der Leiterplatte 15 ist eine Entstör- bzw. Ansteuerungselektronik 16' für die SMD-Leuchtdiode 6' befestigt und verschaltet. Der Innenraum des Leuchtelements 2 bzw. des Leuchtelementkörpers 21 ist durch eine Abschlusskappe 28 verschlossen. Der Leuchtelementkörper 21 ist in einer Buchse 29 verklebt, welche in eine Bohrung in der Flugzeugkabinendecke 1 geklebt ist. Die Buchse 29 hat im mittleren und oberen Teil eine weite Bohrung zur Aufnahme des Leuchtelementkörpers 21, im untersten Teil jedoch nur eine sehr schmale Bohrung, die lediglich den Durchtritt des Lichtaustrittsabschnitts 30 des Leuchtelementkörpers 21 zulässt.

Die in den verschiedenen Ausführungsbeispielen aufgezeigten Merkmale können beliebig miteinander kombiniert werden, ohne dass der Umfang der Erfindung verlassen wird. So kann das Leuchtelement z.B. sowohl bezüglich der Oberseite als auch bezüglich der Unterseite der Deckenpanele der Flugzeugkabine bündig angeordnet sein, wobei die Lichtaustrittsfläche des Leuchtelements, die Stirnfläche der Buchse und die Oberfläche der Deckenpanele vorzugsweise wiederum bündig zueinander angeordnet sind. Die Lichtaustrittsfläche des Leuchtelements kann plan oder auch angeraut ausgeführt sein. Mit letzterem wird erreicht, dass das aus dem Leuchtelement austretende Licht in verschiedene Richtungen gestreut wird, wodurch der durch die Lichtaustrittsfläche hervorgerufene Leuchtpunkt aus allen Richtungen (also auch unter sehr flachen Betrachtungswinkeln) aus dem Innenraum 5 der Flugzeugkabine sichtbar ist.

## Patentansprüche

1. Leuchtelement (2) mit einem Leuchtmittel (6,6'), vorzugsweise einer Leuchtdiode (LED), wobei das Leuchtelement (2) in einen Leuchtenträger (1) einbaubar ist und einen lichtdurchlässigen Linsenkörper (7) mit einer linsenförmigen Lichteintrittsfläche (8) und mit einer Lichtaustrittsfläche (9) aufweist, wobei die Lichtaustrittsfläche (9) kleiner als die Lichteintrittsfläche (8) ist,
**dadurch gekennzeichnet,**
**dass** das Leuchtmittel (6,6') zumindest teilweise mit Silikon (22) in dem Leuchtelement (2) vergossen und in diesem lösbar befestigt ist.

2. Leuchtelement nach Anspruch 1,
**dadurch gekennzeichnet,**
**dass** die Lichteintrittsfläche (8) derart geformt ist, dass das von dem Leuchtmittel (6,6') in den Linsenkörper (7) eindringende Licht auf die Lichtaustrittsfläche (9) gelenkt wird.

3. Leuchtelement nach Anspruch 1 oder 2,
**dadurch gekennzeichnet,**
**dass** das Leuchtmittel (6,6') in dem Leuchtelement (2) derart angeordnet ist, dass ein Großteil des von ihm ausgestrahlten Lichts auf die Lichteintrittsfläche (8) des Linsenkörpers (7) trifft.

4. Leuchtelement nach einem der Ansprüche 1 bis 3,
**dadurch gekennzeichnet,**
**dass** das Leuchtelement (2) derart in den Leuchtenträger (1) eingebaut ist, dass die Lichtaustrittsfläche (9) des Linsenkörpers (7) bündig mit der Oberfläche des Leuchtenträgers (1) ist.

5. Leuchtelement nach einem der vorherigen Ansprüche,
**dadurch gekennzeichnet,**
**dass** der Linsenkörper (7) aus transparentem Kunststoff besteht und die Lichtaustrittsfläche (9) des Linsenkörpers (7) plan und/oder angeraut ist.

6. Leuchtelement nach einem der vorherigen Ansprüche,
**dadurch gekennzeichnet,**
**dass** das Leuchtmittel (6,6') auf einer Leiterplatte (15) befestigt und verschaltet ist, welche in dem Leuchtelement (2) angeordnet und zumindest teilweise mit Silikon (22) vergossen und lösbar befestigt ist, wobei das Leuchtmittel (6,6') vorzugsweise als SMD-Leuchtdiode ausgeführt ist.

7. Leuchtelement nach einem der vorherigen Ansprüche,
**dadurch gekennzeichnet,**
**dass** der Linsenkörper (7) in einen Leuchtelementkörper (21) integriert ist, welcher aus demselben Material besteht wie der Linsenkörper (7) und welcher das Leuchtmittel (6,6') aufnimmt, wobei Linsenkörper (7) und Leuchtelementkörper (21) vorzugsweise einstückig ausgeführt sind.

8. Leuchtelement nach einem der vorherigen Ansprüche,
**dadurch gekennzeichnet,**
**dass** das Leuchtelement (2) bzw. der Leuchtelementkörper (21) eine Führung (24), vorzugsweise mit Anschlag, für das Leuchtmittel (6,6') und/oder eine Führung (17), vorzugsweise mit Anschlag (18), für die Leiterplatte (15) und/oder eine Ausnehmung (26,27) für die Zuführung eines elektrischen Kabels (13,14) in das Leuchtelement (2) bzw. den Leuchtelementkörper (21) aufweist.

9. Leuchtelement nach einem der vorherigen Ansprüche,
**dadurch gekennzeichnet,**
**dass** das Leuchtelement (2) bzw. der Leuchtelementkörper (21) in einer Buchse (29) gehaltert sind, welche in dem Leuchtenträger (1) eingebaut ist, wobei vorzugsweise die Lichtaustrittsfläche (9) des Linsenkörpers (7), die Stirnfläche der Buchse (29) und die Oberfläche des Leuchtenträgers (1) bündig sind.

10. Leuchtelement nach Anspruch 9,
**dadurch gekennzeichnet,**
**dass** das Leuchtelement (2) bzw. die Buchse (29) im Leuchtenträger (1) verklebt ist.

11. Leuchtelement nach einem der vorherigen Ansprüche,
**dadurch gekennzeichnet,**
**dass** der Leuchtenträger (1) die Decke oder Wand einer Flugzeugkabine ist, dass die Leuchtdiode (6,6') weißes Licht abstrahlt und/oder dass das Leuchtelement (2) Teil einer Sternenhimmel-Beleuchtung ist.

## Claims

1. Light-emitting element (2) with a light-emitting means (6, 6'), preferably a light-emitting diode (LED), it being possible for the light-emitting element (2) to be installed in a luminaire mount (1), and said light-emitting element (2) having a light-transmissive lens body (7) with a lens-shaped light entry surface (8) and with a light exit surface (9), the light exit surface (9) being smaller than the light entry surface (8), **characterized in that** the light-emitting means (6, 6') is cast at least partially with silicone (22) in the light-emitting element (2) and is fixed releasably therein.

2. Light-emitting element according to Claim 1, **characterized in that** the light entry surface (8) is shaped in such a way that the light passing into the lens body (7) from the light-emitting means (6, 6') is directed onto the light exit surface (9).

3. Light-emitting element according to Claim 1 or 2, **characterized in that** the light-emitting means (6, 6') is arranged in the light-emitting element (2) in such a way that a large proportion of the light emitted thereby is incident on the light entry surface (8) of the lens body (7).

4. Light-emitting element according to one of Claims 1 to 3, **characterized in that** the light-emitting element (2) is installed in the luminaire mount (1) in such a way that the light exit surface (9) of the lens body (7) is flush with the surface of the luminaire mount (1).

5. Light-emitting element according to one of the preceding claims, **characterized in that** the lens body (7) consists of transparent plastic, and the light exit surface (9) of the lens body (7) is flat and/or rough.

6. Light-emitting element according to one of the preceding claims, **characterized in that** the light-emitting means (6, 6') is fixed and wired on a printed circuit board (15), which is arranged in the light-emitting element (2), is cast at least partially with silicone (22) and is fixed releasably, the light-emitting means (6, 6') preferably being in the form of an SMD light-emitting diode.

7. Light-emitting element according to one of the preceding claims, **characterized in that** the lens body (7) is integrated in a light-emitting element body (21), which consists of the material as the lens body (7) and which receives the light-emitting means (6, 6'), the lens body (7) and the light-emitting element body (21) preferably having an integral design.

8. Light-emitting element according to one of the preceding claims, **characterized in that** the light-emitting element (2) or the light-emitting element body (21) has a guide (24), preferably with a stop, for the light-emitting means (6, 6') and/or a guide (17), preferably with a stop (18), for the printed circuit board (15) and/or a cutout (26, 27) for supplying an electrical cable (13, 14) into the light-emitting element (2) or the light-emitting element body (21).

9. Light-emitting element according to one of the preceding claims, **characterized in that** the light-emitting element (2) or the light-emitting element body (21) is held in a bush (29), which is installed in the luminaire mount (1), with the light exit surface (9) of the lens body (7), the end face of the bush (29) and the surface of the luminaire mount (1) preferably being flush.

10. Light-emitting element according to Claim 9, **characterized in that** the light-emitting element (2) or the bush (29) is adhesively bonded in the luminaire mount (1).

11. Light-emitting element according to one of the preceding claims, **characterized in that** the luminaire mount (1) is the ceiling or wall of an aircraft cabin, **in that** the light emitting diode (6, 6') emits white light and/or **in that** the light-emitting element (2) is part of a starry-sky lighting system.

## Revendications

1. Elément d'éclairage (2) doté d'un moyen d'éclairage (6, 6'), de préférence d'une diode luminescente (LED),
l'élément d'éclairage (2) pouvant être monté dans un support de lampe (1) et présentant un corps de lentille (7) transparent vis-à-vis de la lumière doté d'une surface (8) d'entrée de lumière en forme de lentille et d'une surface (9) de sortie de lumière,
la surface (9) de sortie de lumière étant plus petite que la surface (8) d'entrée de lumière, **caractérisé en ce que**
le moyen d'éclairage (6, 6') est moulé au moins en partie à l'aide de silicone (22) dans l'élément d'éclairage (2) et y est fixé de manière libérable.

2. Elément d'éclairage selon la revendication 1, **caractérisé en ce que** la surface (8) d'entrée de lumière est configurée de telle sorte que la lumière provenant du moyen d'éclairage (6, 6') et qui pénètre dans le corps de lentille (7) est déviée sur la surface (9) de sortie de lumière.

3. Elément d'éclairage selon les revendications 1 ou 2, **caractérisé en ce que** le moyen d'éclairage (6, 6') est disposé dans l'élément d'éclairage (2) de telle sorte que la plus grande partie de la lumière qu'il rayonne aboutit sur la surface (8) d'entrée de lumière du corps de lentille (7).

4. Elément d'éclairage selon l'une des revendications 1 à 3, **caractérisé en ce que** l'élément d'éclairage (2) est monté dans le support de lampe (1) de telle sorte que la surface (9) de sortie de lumière du corps de lentille (7) affleure à la surface du support de lampe (1).

5. Elément d'éclairage selon l'une des revendications précédentes, **caractérisé en ce que** le corps de lentille (7) est constitué de matière synthétique transparente et **en ce que** la surface (9) de sortie de lumière du corps de lentille (7) est plane et/ou rugueuse.

6. Elément d'éclairage selon l'une des revendications précédentes, **caractérisé en ce que** le moyen d'éclairage (6, 6') est fixé et raccordé sur une carte de circuit (15) disposée dans l'élément d'éclairage (2) et englobé au moins en partie dans du silicone (22) en y étant fixé de manière libérable, le moyen d'éclairage (6, 6') étant de préférence configuré comme diode luminescente SMD.

7. Elément d'éclairage selon l'une des revendications précédentes, **caractérisé en ce que** le corps de lentille (7) est intégré dans un corps (21) d'élément d'éclairage constitué du même matériau que le corps de lentille (7) et qui reprend le moyen d'éclairage (6, 6'), le corps de lentille (7) et le corps (21) d'élément d'éclairage étant de préférence réalisés d'un seul tenant.

8. Elément d'éclairage selon l'une des revendications précédentes, **caractérisé en ce que** l'élément d'éclairage (2) ou le corps (21) d'élément d'éclairage présentent un guide (24), de préférence doté d'une butée, pour le moyen d'éclairage (6, 6'), un guide (17), de préférence doté d'une butée (18), pour la carte du circuit (15) et/ou un logement (26, 27) pour le guide d'un câble électrique (13, 14) dans l'élément d'éclairage (2) ou le corps (21) d'élément d'éclairage.

9. Elément d'éclairage selon l'une des revendications précédentes, **caractérisé en ce que** l'élément d'éclairage (2) ou le corps (21) de l'élément d'éclairage sont maintenus dans une douille (29) montée dans le support de lampe (1), la surface (9) de sortie de lumière du corps de lentille (7), la surface frontale de la douille (29) et la surface du support de lampe (1) étant de préférence alignées à chant.

10. Elément d'éclairage selon la revendication 9, **caractérisé en ce que** l'élément d'éclairage (2) ou la douille (29) sont collés dans le support de lampe (1).

11. Elément d'éclairage selon l'une des revendications précédentes, **caractérisé en ce que** le support de lampe (1) est le plafond ou la paroi de la cabine d'un avion, **en ce que** la diode luminescente (6, 6') émet de la lumière blanche et/ou **en ce que** l'élément d'éclairage (2) fait partie d'un éclairage en ciel étoilé.
